(19) Europäisches Patentamt
European Patent Office
Office européen des brevets

(11) **EP 4 451 035 A1**

(12) **EUROPEAN PATENT APPLICATION**
published in accordance with Art. 153(4) EPC

(43) Date of publication:
**23.10.2024 Bulletin 2024/43**

(51) International Patent Classification (IPC):
***G02B 21/00*** (2006.01)

(21) Application number: **23853729.4**

(22) Date of filing: **05.07.2023**

(86) International application number:
**PCT/CN2023/105806**

(87) International publication number:
**WO 2024/183200 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.03.2023 CN 202310217032**

(71) Applicant: **TSINGHUA UNIVERSITY
Beijing, 100084 (CN)**

(72) Inventors:
• **DAI, Qionghai
  Beijing 100084 (CN)**
• **ZHOU, Yiliang
  Beijing 100084 (CN)**
• **ZHAO, Zhifeng
  Beijing 100084 (CN)**
• **WU, Jiamin
  Beijing 100084 (CN)**

(74) Representative: **Kransell & Wennborg KB
P.O. Box 2096
403 12 Göteborg (SE)**

(54) **TWO-PHOTON SYNTHETIC APERTURE MICROSCOPY SYSTEM AND METHOD BASED ON FOCUS-TUNABLE LENS**

(57) The present application discloses a pancratic lens-based 2-photon synthetic aperture microscopy system and method. The system includes a femtosecond excitation light source configured to provide femtosecond laser for 2-photon excitation; a diffraction limit size small aperture module configured to increase a high-frequency component of a 2-photon small-aperture excitation point spread function to a target component; a pancratic lens configured to perform axial position adjusting on a focal plane position at different view excitations and change excitation focal plane positions at different view excitations so as to move axial positions of an optimal lateral resolution layer under different views; and an obtaining module configured to obtain three-dimensional high-resolution information of a microscopic sample by performing three-dimensional deconvolution on images of the microscopic sample at different views based on the axial positions of the optimal lateral resolution layer at different views. Thus, technical problems in related art that lots of artifacts are increased due to noise, accuracy of biological phenomenon observation is decreased and user experience is decreased are solved.

Fig. 1

## Description

## CROSS-REFERENCE TO RELATED APPLICATION

The present application is based on and claims priority to Chinese patent application No. 202310217032.6 filed on March 07, 2023, the entire content of which is incorporated herein by reference.

## TECHNICAL FIELD

The present application relates to the technical field of computational microscopy imaging, and particularly relates to a pancratic lens-based 2-photon synthetic aperture microscopy system and method.

## BACKGROUND

In related art, a high-frequency component of small-aperture excitation may be increased in a manner of adding a small aperture with a diffraction limit size at a conjugate plane position of a focal plane and an objective imaging plane in actual imaging, so that excitation light causes a "secondary focusing" phenomenon to increase lateral resolution. However, an axial narrowest interface of the excitation light may still be slightly wider than a traditional 2-photon excitation mode, and the lateral resolution may be perfectly restored through a three-dimensional deconvolution technology.

However, problems in related art that lots of artifacts easily occur in deconvolution results due to noise, particularly lateral resolution at a far position of the axial position from the focal plane in three-dimensional imaging of a large-thickness sample is extremely low, accuracy of biological phenomenon observation is decreased and user experience is decreased urgently need to be solved.

## SUMMARY

The present application is provided by the inventor based on the following problems and understandings:

As nonlinear optical imaging, 2-photon microscopy (2PM) has a series of advantages of deep imaging, high scattering resistance and high axial resolution and has wide applications in brain science and other living life science researches. Limited to the imaging principle, the 2PM may obtain three-dimensional information of a sample in a layer-by-layer point-by-point scanning manner only, which limits increase of a body observation speed and decrease of phototoxicity to some extent. A 2-photon synthetic aperture microscopy increases the depth of field by using an operating mode of small-aperture excitation with a low-numerical aperture (NA), restores a three-dimensional body through a computational method by utilizing multi-view projection, increases the body observation speed, decreases the phototoxicity, and is a good complement of the 2PM.

However, the operating mode of small-aperture excitation with a low-NA means decrease of the lateral resolution. A high-frequency component of small-aperture excition may be increased in a manner of adding a diffraction limit size small-aperture at a conjugate plane position of a focal plane and an objective imaging plane in actual imaging, so that excitation light causes a "secondary focusing" phenomenon to increase the lateral resolution. However, an axial narrowest interface of the excitation light may still be slightly wider than a traditional 2-photon excitation mode, and the lateral resolution may be perfectly restored through a three-dimensional deconvolution (3D deconvolution) technology theoretically. However, lots of artifacts easily occur in deconvolution results due to noise. In addition, lateral resolution at a far position of the axial position from the focal plane in three-dimensional imaging of a large-thickness sample is extremely low, which goes against biological phenomenon observation. Therefore, the resolution problem in the 2-photon aperture microscopy cannot be solved by the microscopy imaging method in related art and needs to be improved.

The present application provides a pancratic lens-based 2-photon synthetic aperture microscopy system and method, for solving the technical problems in the related art that lots of artifacts easily occur in deconvolution results due to noise, particularly the lateral resolution at the far position of the axial position from the focal plane in three-dimensional imaging of the large-thickness sample is extremely low, the accuracy of biological phenomenon observation is decreased and the user experience is decreased.

Embodiments in a first aspect of the present application provide a pancratic lens-based 2-photon synthetic aperture microscopy system. The system includes a femtosecond excitation light source configured to provide femtosecond laser for 2-photon excitation; a diffraction limit size small aperture module configured to increase a high-frequency component of a 2-photon small-aperture excitation point spread function to a target component; a pancratic lens configured to perform axial position adjusting on a focal plane position at different view excitations and change excitation focal plane positions at different view excitations so as to move axial positions of an optimal lateral resolution layer at different views; and an obtaining module configured to obtain three-dimensional high-resolution information of a microscopic sample by performing three-dimensional deconvolution on images of a microscopic sample at different views based on the axial positions of the optimal lateral resolution layer at different views.

In an embodiment of the present application, the obtaining module includes an angle scanning module configured to perform multi-view projection imaging on a fiber sample; a spatial scanning module configured to implement two-dimensional imaging to obtain projection images of the fiber sample at multiple views; a microscope objective configured to converge excitation light; and a photomultiplier tube configured to collect a fluorescence signal emitted by fluorescent molecules of the sample.

In an embodiment of the present application, the system in the embodiments of the present application further includes a beam expanding module configured to change a beam diameter of the excitation light before entering the microscope objective so as to control the excited numerical aperture to reach a target size.

In an embodiment of the present application, the beam expanding module comprises at least one beam expander.

In an embodiment of the present application, the pancratic lens is an electric pancratic lens.

Embodiments in a second aspect of the present application provide a pancratic lens-based 2-photon synthetic aperture microscopy method. The method includes: increasing a high-frequency component of a 2-photon small-aperture excitation point spread function to a target component; performing axial position adjusting on a focal plane position at different view excitations and changing excitation focal plane positions at different view excitations so as to move axial positions of an optimal lateral resolution layer at different views; and performing three-dimensional deconvolution on images of a microscopic sample at different views based on the axial positions of the optimal lateral resolution layer at different views, to obtain three-dimensional high-resolution information of the sample.

In an embodiment of the present application, the performing the three-dimensional deconvolution on the images of the microscopic sample at the different views based on the axial positions of the optimal lateral resolution layer at the different views to obtain the three-dimensional high-resolution information of the sample includes: performing multi-view projection imaging on a fiber sample; implementing two-dimensional imaging to obtain projection images of the fiber sample at multiple views; converging excitation light; and collecting a fluorescence signal emitted by fluorescent molecules of the sample.

In an embodiment of the present application, before the excitation light enters the microscope objective, the method further includes: changing a beam diameter of the excitation light to control the excited numerical aperture to reach a target size.

Embodiments in a third aspect of the present application provide an electronic device. The electronic device includes a memory, a processor, and a computer program stored in the memory and executable on the processor. The processor, when executing the computer program, implements the pancratic lens-based 2-photon synthetic aperture microscopy method according to the above embodiments.

Embodiments in a fourth aspect of the present application provide a computer readable storage medium which has a computer program stored thereon. The computer program, when executed by a processor, implements the above pancratic lens-based 2-photon synthetic aperture microscopy method.

In the embodiments of the present application, the femtosecond excitation light source may provide the femtosecond laser for 2-photon excitation; the high-frequency component of the 2-photon small-aperture excitation point spread function is increased to the target component by utilizing the diffraction limit size small aperture module; the axial position adjusting is performed on the focal plane position at different view excitations through the pancratic lens, and excitation focal plane positions at different view excitations are changed so as to move the axial positions of the optimal lateral resolution layer at different views. Thus, images of the microscopic sample at different views are subjected to three-dimensional deconvolution by the obtaining module based on the axial positions of the optimal lateral resolution layer at different views, to obtain three-dimensional high-resolution information of the sample, further effectively obtaining better lateral resolution, decreasing the artifacts, increasing flexibility of the system and increasing the user experience. Therefore, the technical problems in the related art that lots of artifacts easily occur in the deconvolution results due to noise, particularly the lateral resolution at the far position of the axial position from the focal plane in three-dimensional imaging of the large-thickness sample is extremely low, the accuracy of biological phenomenon observation is decreased and the user experience is decreased are solved.

Additional aspects and advantages of the present application will be partially described below, will be partially obvious in descriptions below or understood through practice of the present application.

## BRIEF DESCRIPTION OF DRAWINGS

The above and/or additional aspects and advantages of the present application will be obvious and easily understood in descriptions of the embodiments in combination with drawings below, wherein:

Fig. 1 is a schematic structural diagram of a pancratic lens-based 2-photon synthetic aperture microscopy system according to embodiments of the present application;

Fig. 2 is a schematic structural diagram of a pancratic lens-based 2-photon synthetic aperture microscopy system in one specific embodiment of the present application;

Fig. 3 is a contrast diagram of a point spread function and energy distribution for evaluating a prototype system in one specific embodiment of the present application;

Fig. 4 is a contrast diagram of three-dimensional reconstruction results of axial each-layer resolution panels in one specific embodiment of the present application;

Fig. 5 is a flow chart of a pancratic lens-based 2-photon synthetic aperture microscopy method according to embodiments of the present application; and

Fig. 6 is a schematic structural diagram of an electronic device according to embodiments of the present application.

## DESCRIPTION OF EMBODIMENTS

Embodiments of the present application will be described in detail below. Examples of the embodiments are illustrated in the drawings, through which identical or similar symbols refer to identical or similar components or components having identical or similar functions. Embodiments described through reference drawings below are illustrative and are intended to be used for explaining the present application rather than limiting the present application.

A pancratic lens-based 2-photon synthetic aperture microscopy system according to the embodiments of the present application is described below with reference to drawings.

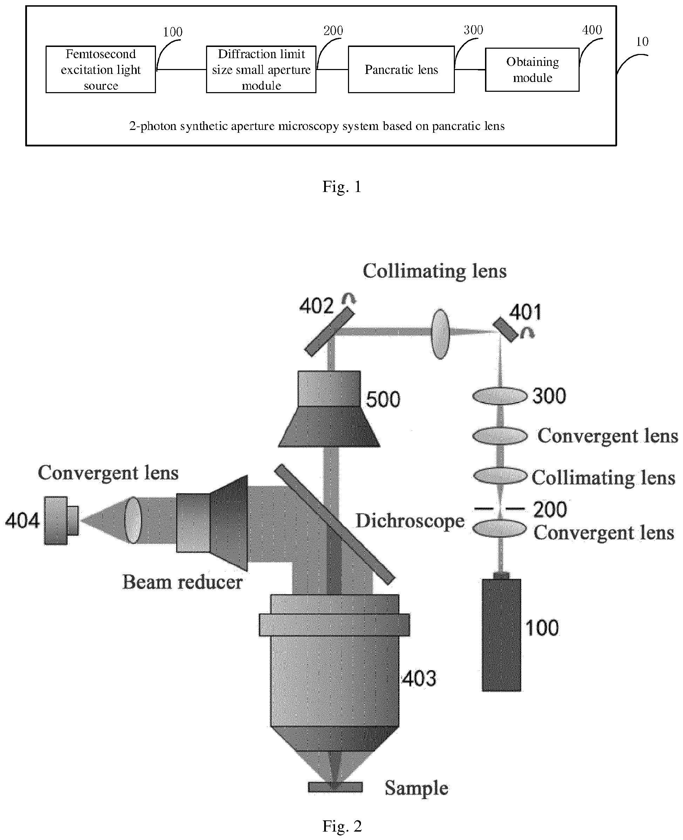

Fig. 1 is a schematic structural diagram of a pancratic lens-based 2-photon synthetic aperture microscopy system according to embodiments of the present application.

As shown in Fig. 1, the pancratic lens-based 2-photon synthetic aperture microscopy system 10 includes a femtosecond excitation light source 100, a diffraction limit size small aperture module 200, a pancratic lens 300 and an obtaining module 400.

Specifically, the femtosecond excitation light source 100 is configured to provide femtosecond laser for 2-photon excitation.

In actual execution, the femtosecond excitation light source 100 may be provided in the embodiments of the present application, and may be configured to provide femtosecond laser for the 2-photon excitation, thereby effectively increasing executability of the system.

The diffraction limit size small aperture module 200 is configured to increase a high-frequency component of a 2-photon small-aperture excitation point spread function to a target component.

In some embodiments, the diffraction limit size small aperture module 200 may be provided in the embodiments of the present application, and may be configured to increase the high-frequency component of the 2-photon small-aperture excitation point spread function to the target component. For example, excitation beams may be subjected to shaping and spatial constraining, and a frequency domain range of low-NA small-aperture excitation is widened, thereby effectively increasing lateral resolution.

The pancratic lens 300 is configured to perform axial position adjusting on a focal plane position at different view excitations and change excitation focal plane positions at different view excitations so as to move axial positions of an optimal lateral resolution layer at different views.

As a possible implementation, the pancratic lens 300 in the following actions may be provided in the embodiments of the present application, and may be configured to perform axial position adjusting on a focal plane position at different view excitations and change excitation focal plane positions at different view excitations so as to move the axial positions of the optimal lateral resolution layer at different views. For example, in a process of performing projection imaging at different angles, a focal length of the pancratic lens 300 may be designed and changed to change the axial position of the optimal lateral resolution layer, thereby effectively increasing the lateral resolution.

In an embodiment of the present application, the pancratic lens 300 is an electric pancratic lens.

In some embodiments, the pancratic lens 300 in the embodiments of the present application may be an electric pancratic lens and may realize continuous voltage control from negative diopter to positive diopter. For example, the electric pancratic lens may continuously adjust the diopter from negative to positive under an experimental near-infrared band. In combination with a beam expanding module 500 and a microscope objective 403 in the following actions, the electric pancratic lens can realize axial focal plane movement in a +/hundreds-of-micron range at the focal plane of the sample, thereby effectively increasing applicability and reliability of the system.

The obtaining module 400 is configured to obtain three-dimensional high-resolution information of a microscopic sample by performing three-dimensional deconvolution on images of the microscopic sample at different views based on the axial positions of the optimal lateral resolution layer at different views.

In actual execution, the obtaining module 400 in the following actions may be provided in the embodiments of the present application, and may be configured to obtain three-dimensional high-resolution information of the microscopic sample by performing three-dimensional deconvolution on images of the microscopic sample at different views based on the axial positions of the optimal lateral resolution layer at different views, thereby effectively increasing the lateral resolution, decreasing artifacts and improving user experience.

For instance, in the embodiments of the present application, an actual position of a focal plane under the microscope objective through different focal length settings of the electric pancratic lens may be obtained in manners of actual measurement and optical computing; a specific shape of the point spread function in the imaging process at different angles is obtained through simulation in combination with parameters of the electric pancratic lens; and three-dimensional deconvolution is performed to obtain the three-dimensional information of the imaging sample by utilizing the point spread function and projection images at different angles. Therefore, the user experience is effectively improved; and using requirements of the users are met.

In an embodiment of the present application, the obtaining module 400 includes an angle scanning module 401, a spatial scanning module 402, a microscope objective 403 and a photomultiplier tube 404.

The angle scanning module 401 is configured to perform multi-view projection imaging on a fiber sample.

As a possible implementation, as shown in Fig. 2, the angle scanning module 401 may be arranged in the obtaining module 400, and may be configured to perform multi-view projection imaging on the fiber sample. For example, the angle scanning module 401 may include a two-dimensional scanning galvanometer arranged on a conjugate plane of an object plane for controlling an incident angle of excitation light, thereby effectively increasing robustness of the incident angle of laser.

The spatial scanning module 402 is configured to implement two-dimensional imaging to obtain projection images of the fiber sample at multiple views.

In some embodiments, as shown in Fig. 2, the spatial scanning module 402 may be arranged in the obtaining module 400, and may be configured to implement two-dimensional imaging to obtain the projection images of the fiber sample at multiple views. For example, the spatial scanning module 402 may include two one-dimensional scanning galvanometers arranged on a Fourier plane for controlling a lateral position of the excitation light, thereby increasing accuracy of the lateral position of laser.

In some embodiments, as shown in Fig. 2, in the embodiments of the present application, the projection images of the sample at different views are obtained under cooperative control of the angle scanning module 401 and the spatial scanning module 402, thereby effectively decreasing the artifacts and increasing a body observation speed. In addition, after the spatial scanning module 402 finishes imaging once, focal lengths of both the angle scanning module 401 and the electric pancratic lens are changed, and then the next angle is subjected to projection imaging at a different view.

The microscope objective 403 is configured to converge excitation light.

As a possible implementation, as shown in Fig. 2, the microscope objective 403 may be arranged in the obtaining module 400, and may be configured to converge excitation light, thereby effectively increasing the lateral resolution and decreasing the artifacts.

The photomultiplier tube 404 is configured to collect a fluorescence signal emitted by fluorescent molecules of the sample.

In some embodiments, as shown in Fig. 2, the photomultiplier tube 404 may be arranged in the obtaining module 400, and is configured to collect the fluorescence signal emitted by fluorescent molecules of the sample. For instance, the fluorescent molecules of the sample are excited to emit light; the light is collected by the microscope objective 403 and then received by the photomultiplier tube 404; and the projection image is further obtained. Therefore, the projection image at multiple views may be obtained; higher flexibility of the depth of field is achieved; and the user experience is increased.

In an embodiment of the present application, the system 10 in the embodiments of the present application further includes a beam expanding module 500.

The beam expanding module 500 is configured to change a beam diameter of the excitation light before entering the microscope objective 403 so as to control the excited numerical aperture to reach a target size.

In actual execution, as shown in Fig. 2, the beam expanding module 500 in the following actions may be arranged in the embodiments of the present application, and may be configured to change the beam diameter of the excitation light before entering the microscope objective 403 so as to control the excited numerical aperture to reach the target size, that is, to realize small-aperture excitation of low numerical aperture, thereby effectively increasing accuracy of the numerical aperture.

In an embodiment of the present application, the beam expanding module 500 includes at least one beam expander.

In some embodiments, as shown in Fig. 2, the beam expanding module 500 in the embodiments of the present application may include at least one beam expander, and may change the beam diameter of the excitation light through the beam expander so as to increase the accuracy of the excited numerical aperture. In addition, the beam expanding module 500 may be further provided with a plurality of beam expanders for increasing multi-directional control of the excitation light. Specifically, the beam expanders may be arranged according to actual situations, thereby meeting cost requirements and further effectively increasing the accuracy and reliability of the excited numerical aperture.

Operating principles of the embodiments of the present application are described below in detail by virtue of some specific embodiments.

For example, as shown in Fig. 2, a combination of the electric pancratic lens in the pancratic lens module and a convergent lens in front of the electric pancratic lens may be equivalent to a new convergent lens with a changing focal length. When diopter of the electric pancratic lens is set as Odpt, the new convergent lens is exactly equivalent to a separate original convergent lens. When the diopter of the electric pancratic lens is not equal to 0, an equivalent focal length of the new convergent lens is different from the focal length of the original convergent lens; back-and-forth movement of the axial position occurs at the convergence point; and after decreased by an optical system, the back-and-forth movement distance is equivalent to axial movement of a focal plane position under the microscope objective.

In some embodiments, as shown in Fig. 2, the focal length of the convergent lens in front of the electric pancratic lens is + 500mm; and the diopter of the electric pancratic lens (optotune, EL-16-40-TC-VIS-5D) may be changed from -2dpt (i.e., a focal length of -500mm) to +3dpt (i.e., a focal length of + 333mm), according to a geometrical optical equivalent focal length formula as follows:

$$\frac{1}{f_{Synthetic}} = \frac{1}{f_1} + \frac{1}{f_2} - \frac{d}{f_1 f_2}$$

In the formula, d is a distance between the electric pancratic lens and the convergent lens in front of the electric pancratic lens.

The equivalent focal length of the two lenses may be calculated according to the above formula, and then in combination with an axial magnification of the optical system, the diopter of the electric pancratic lens may be calculated to be adjusted in a range from -0.79dpt to +3dpt, to realize the axial change of the focal plane at a range of $\pm 100 \mu$m from the sample position

Then, before the excitation light enters the microscope objective, the beam diameter of the light is changed by the beam expander to realize small-aperture excitation. The small-aperture excitation has a larger depth of field, and therefore, scanning imaging preformed by utilizing the point spread function of the small-aperture excitation is equivalent to projection imaging of the sample.

In addition, in the embodiments of the present application, the NA size in the small-aperture excitation process may be controlled as 0.1 by adjusting a beam expanding magnification of the beam expander, while the NA size of the microscope objective is 1.05. Thus, the obtained depth of field of the point spread function, PSF, is about 50$\mu$m.

Finally, in the embodiments of the present application, the projection image of the sample at different views may be obtained under cooperative control of the angle scanning module and the spatial scanning module; one two-dimensional projection image is obtained by the spatial scanning module through one scanning; and before the next scanning, control voltages of the angle scanning module and the spatial scanning module are changed, so that the next projection image is a projection image at another view and another focal plane position. The number of angles of the angle scanning module is controlled as 13; the angles are roughly uniformly distributed on a pupil plane of the microscope objective; and a planar imaging speed of the spatial scanning module is about 30 Hz.

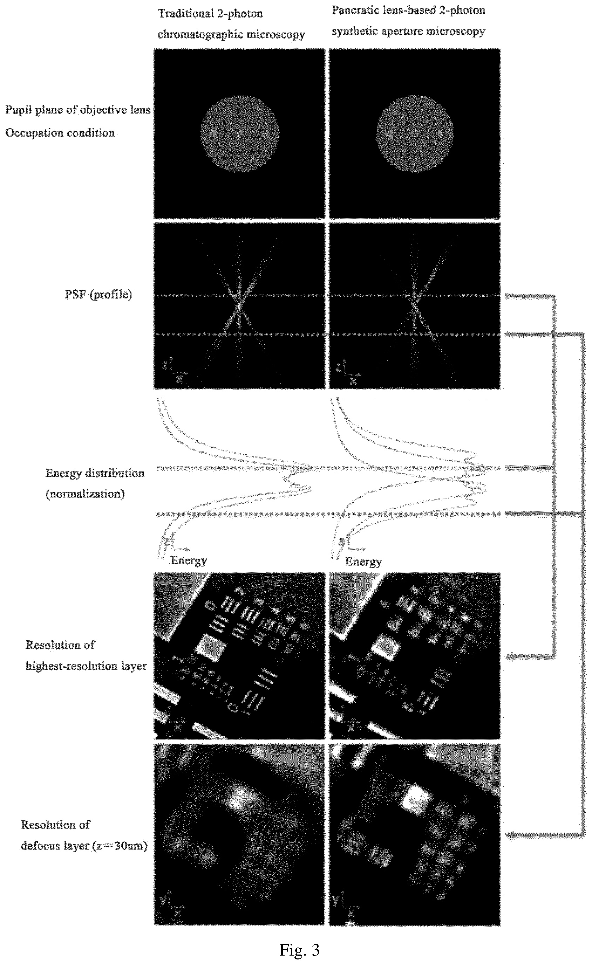

To sum up, Fig. 3 is a contrast diagram of a point spread function and energy distribution for evaluating a prototype system in one specific embodiment of the present application. Compared with a traditional 2-photon synthetic aperture microscopy system, the system in the embodiments of the present application may change the focal plane positions at different views; the lateral resolution is more uniform at different axial positions in a reconstruction body obtained after three-dimensional deconvolution; fewer artifacts are produced; and the depth of field is larger, thereby increasing the user experience.

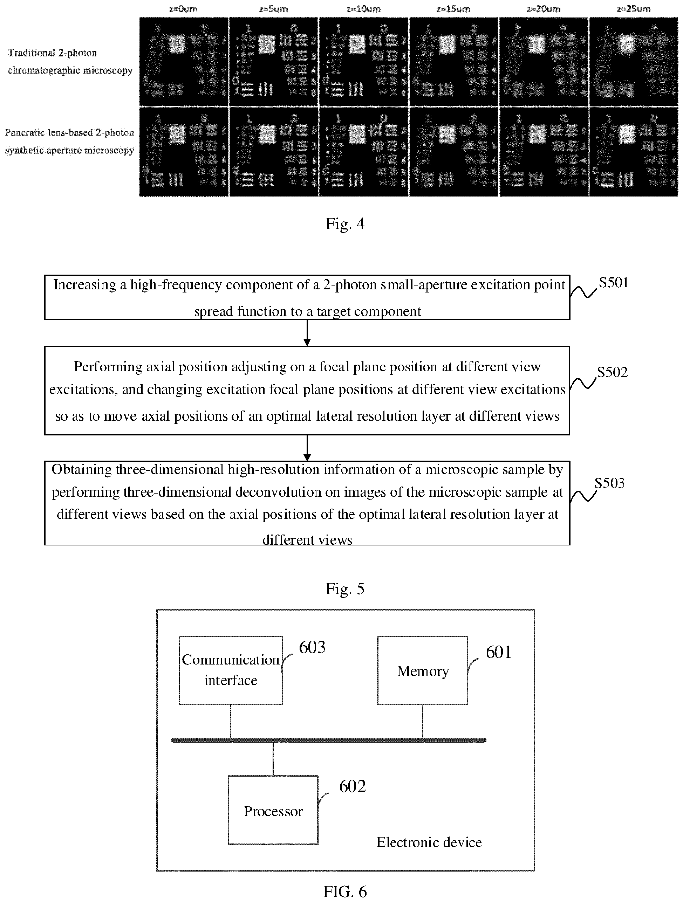

For example, as shown in Fig. 4, although the traditional 2-photon synthetic aperture microscopy has higher resolution at a position of z=5$\mu$m, the resolution at a position of z=25$\mu$m has decreased to a lower level. By contrast, although the system in the embodiments of the present application is not as clear as that in the traditional method, the resolution is not sharply decreased in an entire range from z=5$\mu$m to z=25$\mu$m. Therefore, relatively uniform resolution may effectively suppress noise artifacts and facilitate biological phenomenon observation.

According to the pancratic lens-based 2-photon synthetic aperture microscopy system provided by the embodiments of the present application, the femtosecond excitation light source may provide the femtosecond laser for 2-photon excitation; the high-frequency component of the 2-photon small-aperture excitation point spread function is increased to the target component by utilizing the diffraction limit size small aperture module; the axial position adjusting is performed on the focal plane position at different view excitations through the pancratic lens, and the excitation focal plane positions at different view excitations are changed so as to move the axial positions of the optimal lateral resolution layer at different views. Thus, images of the microscopic sample at different views are subjected to three-dimensional deconvolution by the obtaining module based on the axial positions of the optimal lateral resolution layer at different views, to obtain three-dimensional high-resolution information of the sample, further effectively obtaining better lateral resolution, decreasing the artifacts, increasing flexibility of the system and increasing the user experience. Therefore, the technical problems in the related art that lots of artifacts easily occur in the deconvolution results due to noise, particularly the lateral resolution at the far position of the axial position from the focal plane in three-dimensional imaging of the large-thickness sample is extremely low, the accuracy of biological phenomenon observation is decreased and the user experience is decreased are solved.

As shown in Fig. 5, a pancratic lens-based 2-photon synthetic aperture microscopy method according to the embodiments of the present application includes the following actions.

At S501, femtosecond laser is provided through 2-photon excitation, and a high-frequency component of a 2-photon small-aperture excitation point spread function is increased to a target component.

At S502, axial position adjusting is performed on a focal plane position at different view excitations, and excitation focal plane positions at different view excitations are changed so as to move axial positions of an optimal lateral resolution layer at different views.

At S503, three-dimensional deconvolution is performed on images of a microscopic sample at different views based on the axial positions of the optimal lateral resolution layer at different views, to obtain three-dimensional high-resolution information of the sample.

In an embodiment of the present application, the performing three-dimensional deconvolution on images of the microscopic sample at different views based on the axial positions of the optimal lateral resolution layer at different views to obtain three-dimensional high-resolution information of the sample includes: performing multi-view projection imaging on a fiber sample; implementing two-dimensional imaging to obtain projection images of the fiber sample at multiple views; converging excitation light; and collecting a fluorescence signal emitted by fluorescent molecules of the sample.

In an embodiment of the present application, before the excitation light enters the microscope objective, the method further includes: changing a beam diameter of the excitation light to control the excited numerical aperture to reach a target size.

According to the pancratic lens-based 2-photon synthetic aperture microscopy method provided by the embodiments of the present application, the femtosecond excitation light source may provide the femtosecond laser for 2-photon excitation; the high-frequency component of the 2-photon small-aperture excitation point spread function is increased to the target component by utilizing the diffraction limit size small aperture module; the axial position adjusting is performed on the focal plane position at different view excitations through the pancratic lens, and excitation focal plane positions at different view excitations are changed so as to move the axial positions of the optimal lateral resolution layer at different views. Thus, images of the microscopic sample at different views are subjected to three-dimensional deconvolution by the obtaining module based on the axial positions of the optimal lateral resolution layer at different views, to obtain three-dimensional high-resolution information of the sample, further effectively obtaining better lateral resolution, decreasing the artifacts, increasing flexibility of the system and increasing the user experience. Therefore, the technical problems in the related art that lots of artifacts easily occur in the deconvolution results due to noise, particularly the lateral resolution at the far position of the axial position from the focal plane in three-dimensional imaging of the large-thickness sample is extremely low, the accuracy of biological phenomenon observation is decreased and the user experience is decreased are solved.

Fig. 6 is a structural schematic diagram of an electronic device according to embodiments of the present application. The electronic device may include: a memory 601, a processor 602, and a computer program stored in the memory 601 and executable on the processor 602.

The processor 602 is configured to implement, when executing the computer program, the pancratic lens-based 2-photon synthetic aperture microscopy method according to the above embodiments.

Further, the electronic device includes: a communication interface 603 configured to communicate between the memory 601 and the processor 602.

The memory 601 is configured to store the computer program that is executable in the processor 602.

The memory 601 may include a high-speed RAM memory and may further include a non-volatile memory, such as at least one disk memory.

If the memory 601, the processor 602 and the communication interface 603 are implemented independently, the communication interface 603, the memory 601 and the processor 602 may be connected with one another through buses to implement communication with one another. The buses may be an Industry Standard Architecture (ISA) bus, a Peripheral Component Interconnect (PCI) bus or an Extended Industry Standard Architecture (EISA) bus, etc. The buses may be divided into an address bus, a data bus, a control bus and the like. For simple representation, the buses are only represented by a thick line in Fig. 6, but it does not mean that there is only one bus or one kind of bus.

Optionally, in a specific implementation, if the memory 601, the processor 602 and the communication interface 603 are integrated on one chip, communication among the memory 601, the processor 602 and the communication interface 603 may be implemented through an internal interface.

The processor 602 may be a Central Processing Unit (CPU), or an Application Specific Integrated Circuit (ASIC), or be configured as one or more integrated circuits for implementing the embodiments of the present application.

The embodiments of the present application further provide a computer readable storage medium which has a computer stored thereon. The above pancratic lens-based 2-photon synthetic aperture microscopy method is implemented when the computer program is executed by the processor.

In the description of the specification, the description of reference terms "an embodiment", "some embodiments", "example", "specific example" or "some examples", etc. means that specific features, structures, materials or characteristics illustrated in combination with the embodiment or example are included in at least one embodiment or example of the present application. In this specification, exemplary statements for the above terms do not must aim at the same embodiment or example. Moreover, the described specific features, structures, materials or characteristics can be combined appropriately in any one or N embodiments or examples. In addition, without conflict, those skilled in the art can combine and integrate different embodiments or examples illustrated in the specification and the features of different embodiments or examples.

In addition, the terms such as "first" and "second" are only used for the purpose of description, rather than being understood to indicate or imply relative importance or hint the number of indicated technical features. Thus, the features limited by "first" and "second" can explicitly or impliedly comprise at least one of the features. In the description of the present application, the meaning of "N" is at least two, such as two, three, etc. unless otherwise clearly specified.

The flow chart or any procedure or method description described in any other manner herein may be understood to represent a module, a fragment or a part including codes of executable instructions in one or N steps used for realizing customized logic functions or procedures. Moreover, the scope of preferred implementations of the present application includes additional implementations, throughout which the functions may be executed out of the illustrated or discussed sequence, including a basically simultaneous manner or a reverse order according to the involved functions, which should be understood by those skilled in the art in the embodiments of the present application.

Logics and/or steps represented in the flow chart or described herein in other modes, i.e., a definite sequence table of executable instructions that may be considered to be used for realizing logic functions, may be specifically implemented in any computer readable medium to be used by instruction execution systems, apparatuses or devices (such as a computer-based system, a system including a processor, or any other system that can fetch instructions from the instruction execution system, apparatus or device and execute the instructions), or to be used in combination with these instruction execution systems, apparatuses or devices. For the present description, the "computer readable medium" may be any apparatus that may include, store, communicate, propagate or transmit programs to be used by the instruction execution systems, apparatuses or devices or to be used in combination with these instruction execution systems, apparatuses or devices. More specific examples (a non-exhaustive list) of the computer readable medium include: an electrical connection part (electronic apparatus) having one or N wirings, a portable computer cassette (magnetic apparatus), a random access memory (RAM), a read-only memory (ROM), an erasable programmable read-only memory (EPROM or a flash memory), an optical fiber apparatus and a portable CD read-only memory (CDROM). In addition, the computer readable medium even may be paper on which the programs may be printed or any other appropriate medium, because the paper or any other medium may be subjected to optical scanning and then edited and interpreted or the programs are obtained electronically by processing the paper or any other medium in any other appropriate manner when necessary. Then, the programs are stored in the computer memory.

It should be understood that, various parts of the present application may be implemented by hardware, software, firmware or combinations thereof. In the above implementations, N steps or methods may be implemented by software or firmware that is stored in the memory and executed by an appropriate instruction execution system. For example, if the implementation by hardware is the same as that in another implementation, the steps or methods may be implemented by any or a combination thereof in the following known technologies in the art: a discrete logic circuit having a logic gate circuit used for realizing logic functions for data signals, an application-specific integrated circuit having an appropriate combinational logic gate circuit, a programmable gate array (PGA), a field-programmable gate array (FPGA), etc.

Those ordinary skilled in the art may understand that, total or partial steps for realizing the method in the above embodiments may be completed by programs instructing associated hardware. The programs may be stored in a computer readable storage medium. The programs include one of the steps in the method embodiments or a combination of the steps during execution.

In addition, various functional units in each embodiment of the present application may be integrated in a processing module; each unit may also be of physical existence alone; and two or more units may also be integrated in a module. The above integrated module may be implemented in the form of hardware, and may also be implemented in the form of software function module. If implemented in the form of software function module and sold or used serving as an independent product, the integrated module may also be stored in a computer readable storage medium.

The above mentioned storage medium may be a read-only memory, a magnetic disk or a compact disc. Although the embodiments of the present application have been illustrated and described above, it should be understood that, the above embodiments are illustrative and cannot be understood as a limitation to the present application. Changes, modifications, replacements and transformations of the above embodiments may be made by those ordinary skilled in the art in the scope of the present application.

**Claims**

1. A pancratic lens-based 2-photon synthetic aperture microscopy system based on a pancratic lens, comprising:

   a femtosecond excitation light source configured to provide femtosecond laser for 2-photon excitation;
   a diffraction limit size small aperture module configured to increase a high-frequency component of a 2-photon small-aperture excitation point spread function to a target component;
   a pancratic lens configured to perform axial position adjusting on a focal plane position at different view excitations and change excitation focal plane positions at different view excitations so as to move axial positions of an optimal lateral resolution layer at different views; and

an obtaining module configured to obtain three-dimensional high-resolution information of a microscopic sample by performing three-dimensional deconvolution on images of the microscopic sample at different views based on the axial positions of the optimal lateral resolution layer at different views.

2. The pancratic lens-based 2-photon synthetic aperture microscopy system according to claim 1, wherein the obtaining module comprises:

an angle scanning module configured to perform multi-view projection imaging on a fiber sample;
a spatial scanning module configured to implement two-dimensional imaging to obtain projection images of the fiber sample at multiple views;
a microscope objective configured to converge excitation light; and
a photomultiplier tube configured to collect a fluorescence signal emitted by fluorescent molecules of the sample.

3. The pancratic lens-based 2-photon synthetic aperture microscopy system according to claim 1, further comprising:
a beam expanding module configured to change a beam diameter of excitation light before entering a microscope objective so as to control an excited numerical aperture to reach a target size.

4. The pancratic lens-based 2-photon synthetic aperture microscopy system according to claim 3, wherein the beam expanding module comprises at least one beam expander.

5. The pancratic lens-based 2-photon synthetic aperture microscopy system according to claim 1, wherein the pancratic lens is an electric pancratic lens.

6. A pancratic lens-based 2-photon synthetic aperture microscopy method, applied in the system according to any one of claims 1 to 5, the method comprising:

increasing a high-frequency component of a 2-photon small-aperture excitation point spread function to a target component;
performing axial position adjusting on a focal plane position at different view excitations and changing excitation focal plane positions at different view excitations so as to move axial positions of an optimal lateral resolution layer at different views; and
obtaining three-dimensional high-resolution information of a microscopic sample by performing three-dimensional deconvolution on images of the microscopic sample at different views based on the axial positions of the optimal lateral resolution layer at different views.

7. The method according to claim 6, wherein the obtaining the three-dimensional high-resolution information of the microscopic sample by performing the three-dimensional deconvolution on the images of the microscopic sample at the different views based on the axial positions of the optimal lateral resolution layer at different views comprises:

performing multi-view projection imaging on a fiber sample;
implementing two-dimensional imaging to obtain projection images of the fiber sample at multiple views;
converging excitation light; and
collecting a fluorescence signal emitted by fluorescent molecules of the sample.

8. The method according to claim 6, further comprising, before excitation light enters a microscope objective: changing a beam diameter of the excitation light to control an excited numerical aperture to reach a target size.

9. An electronic device, comprising: a memory, a processor, and a computer program stored in the memory and executable on the processor, wherein the processor, when executing the computer program, implements the pancratic lens-based 2-photon synthetic aperture microscopy method according to any one of claims 6 to 8.

10. A computer readable storage medium, having a computer program stored thereon, wherein the computer program, when executed by a processor, implements the pancratic lens-based 2-photon synthetic aperture microscopy method according to any one of claims 6 to 8.

Fig. 1

Fig. 2

EP 4 451 035 A1

Fig. 3

|  | z=0um | z=5um | z=10um | z=15um | z=20um | z=25um |

Traditional 2-photon chromatographic microscopy

Pancratic lens-based 2-photon synthetic aperture microscopy

Fig. 4

| S501 Increasing a high-frequency component of a 2-photon small-aperture excitation point spread function to a target component |

| S502 Performing axial position adjusting on a focal plane position at different view excitations, and changing excitation focal plane positions at different view excitations so as to move axial positions of an optimal lateral resolution layer at different views |

| S503 Obtaining three-dimensional high-resolution information of a microscopic sample by performing three-dimensional deconvolution on images of the microscopic sample at different views based on the axial positions of the optimal lateral resolution layer at different views |

Fig. 5

Communication interface 603

Memory 601

Processor 602

Electronic device

FIG. 6

## INTERNATIONAL SEARCH REPORT

| | International application No. |
|---|---|
| | **PCT/CN2023/105806** |

**A.     CLASSIFICATION OF SUBJECT MATTER**

G02B21/00(2006.01)i

According to International Patent Classification (IPC) or to both national classification and IPC

**B.     FIELDS SEARCHED**

Minimum documentation searched (classification system followed by classification symbols)

IPC:G02B

Documentation searched other than minimum documentation to the extent that such documents are included in the fields searched

Electronic data base consulted during the international search (name of data base and, where practicable, search terms used)

CNABS, CNTXT, ENTXTC, WPABSC, VCN, ENTXT, VEN, WPABS, DWPI, CJFD: 双光子, 飞秒, 小孔, 可调焦, 角度, 空间, 显微, microscopic, two-photon, femtosecond, small hole, focus-adjustable

**C.     DOCUMENTS CONSIDERED TO BE RELEVANT**

| Category* | Citation of document, with indication, where appropriate, of the relevant passages | Relevant to claim No. |
|---|---|---|
| PX | CN 116338922 A (TSINGHUA UNIVERSITY) 27 June 2023 (2023-06-27)<br>description, paragraphs 29-94, and figures 1-6 | 1-10 |
| X | CN 113238369 A (TSINGHUA UNIVERSITY) 10 August 2021 (2021-08-10)<br>description, paragraphs 1-49, and figures 1-4 | 1-10 |
| X | CN 110823853 A (BEIJING CHAONA VISUAL SENSE TECHNOLOGY CO., LTD.) 21 February 2020 (2020-02-21)<br>description, paragraphs 38-62, and figures 1-4 | 1-10 |
| A | US 2014008549 A1 (UNIVERSITE LAVAL) 09 January 2014 (2014-01-09)<br>entire document | 1-10 |
| A | US 2021048658 A1 (SUZHOU INSTITUTE OF BIOMEDICAL ENGINEERING AND TECHNOLOGY, CHINESE ACADEMY OF SCIENCES et al.) 18 February 2021 (2021-02-18)<br>entire document | 1-10 |

☐ Further documents are listed in the continuation of Box C.          ☑ See patent family annex.

| | |
|---|---|
| \*     Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **27 November 2023** | **07 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/105806**

| Patent document cited in search report | | | Publication date (day/month/year) | Patent family member(s) | | | Publication date (day/month/year) |
|---|---|---|---|---|---|---|---|
| CN | 116338922 | A | 27 June 2023 | None | | | |
| CN | 113238369 | A | 10 August 2021 | None | | | |
| CN | 110823853 | A | 21 February 2020 | None | | | |
| US | 2014008549 | A1 | 09 January 2014 | US | 9201008 | B2 | 01 December 2015 |
| US | 2021048658 | A1 | 18 February 2021 | US | 11550134 | B2 | 10 January 2023 |
| | | | | JP | 3235223 | U | 09 December 2021 |
| | | | | WO | 2020048021 | A1 | 12 March 2020 |

Form PCT/ISA/210 (patent family annex) (July 2022)

**REFERENCES CITED IN THE DESCRIPTION**

**Patent documents cited in the description**

- CN 202310217032